# EUROPÄISCHE PATENTSCHRIFT

(11) **EP 1 316 928 B1**
(45) Veröffentlichungstag und Bekanntmachung des Hinweises auf die Patenterteilung: **07.05.2008**
(21) Anmeldenummer: 01128701.8
(22) Anmeldetag: 01.12.2001
(51) Int. Cl.: G07F 19/00

(54) **Verfahren zur bargeldlosen Abwicklung von Automaten-Nutzungsvorgängen**
Method for conducting cashless processes to use vending machines
Méthode pour effectuer, sans numéraire, des procédures d'utilisation de machines de vente

(43) Veröffentlichungstag der Anmeldung: 04.06.2003
(73) Patentinhaber: Scheidt & Bachmann GmbH, D-41238 Mönchengladbach (DE)
(72) Erfinder: Miller, Norbert, Dr., 41063 Mönchengladbach (DE)
(74) Vertreter: Stenger, Watzke & Ring

(56) Entgegenhaltungen:
- WO-A-00/77697
- WO-A-01/45058

## Beschreibung

Die vorliegende Erfindung betrifft ein Verfahren zur bargeldlosen Abwicklung von Automaten-Nutzungsvorgängen unter Verwendung eines Mobilfunkendgerätes zur Kommunikation mit einer Zentralstelle.

Automaten für unterschiedlichste Nutzungsvorgänge sind umfangreich im Einsatz. Zum einen sind dies Automaten zur direkten Steuerung einer Warenausgabe, beispielsweise Nahrungs- und Genußmittel, Automaten zur Ausgabe von Snacks, Süßigkeiten, Zigaretten, Getränken und dergleichen, Automaten für die Ausgabe von Fahrausweisen, aber auch Automaten zur Ausgabe von Treibstoff an Tankstellen und dergleichen. Weiterhin sind Automaten für die Einräumung von Berechtigungen bekannt, beispielsweise zur Nutzung von Parkraum in Parkhäusern, Zugangsberechtigungen beispielsweise in Freizeitanlagen, Schwimmbädern und dergleichen oder Automaten für die Nutzungsberechtigung von Speicherraum, beispielsweise Schließfächer und dergleichen. Im Sinne der vorliegenden Erfindung wird die Bezeichnung "Automat" ganz allgemein auch für automatisierte Zahlungsvorgänge, also Zahlstellen und dergleichen verwendet. So können unter diesem Begriff auch Verkaufsstellen zusammengefaßt werden, bei welchen im Zusammenhang mit einer manuellen Warenentnahme im wesentlichen ein automatisierter erfindungsgemäßer Zahlungsvorgang stattfindet, sogenannte point of sale.

Der übliche Fall der Automatenbenutzung sieht den Einsatz von Bargeld vor, indem die gewünschte durch den Automaten zu realisierende Leistung unmittelbar durch das Eingeben des erforderlichen Betrages in den Automaten freigegeben wird. Für mögliche Umstellungen von Automaten auf einen bargeldlosen Nutzungsverkehr gibt es die unterschiedlichsten Ansätze. So sind Automaten auf die Nutzung von Kreditkarten umgestellt, wozu allerdings ein online-Betrieb der Automaten erforderlich ist. Auch nutzen Automaten betreiberseitige bargeldlose Zahlungssysteme, beispielsweise durch die Ausgabe von vorausbezahlten oder kreditierten Karten nach vorhergehender Identifikation des Nutzers gegenüber dem Betreiber.

Dokument WO 01/45058 beschreibt ein System und ein Verfahren für einen Verkaufsautomaten, wobei zur Durchführung der Verkaufstransaktion ein Mobilfunkendgerät des Käufers verwendet wird. Der Kunde wählt eine am Automaten angegebene Nummer einer Zentrale und diese übermittelt einen Abwicklungscode zurück. Der Verkaufscode wird an dem Verkaufsautomaten eingegeben und die gewünschte Ware oder Dienstleistung wird ausgegeben.

Weiterhin offenbart Dokument WO 00/77697 ein Verfahren zur bargeldlosen Abwicklung von Automaten-Nutzungsvorgängen unter Verwendung eines Mobilfunkendgerätes.

Erst wenn ein ldentifizierungsvorgang abgeschlossen ist, übermittelt der Mobilfunkbetreiber eine personenbezogene Codenummer an den Nutzer, die dieser an dem Automaten durch Mobiltelefon-Kommunikation eingeben kann und die ihn zur Inanspruchnahme von Nutzungen berechtigt. Die Nummer und die Nutzungsinformation werden im Automaten gespeichert, um einen Inkassovorgang nach dem Benutzungseinlösen durchzuführen.

Bei allen bargeldlosen Systemen ergibt sich das Problem der Eröffnung der Möglichkeit eines gesicherten Inkassovorganges und die direkte Zuordnung zu einem Automatennutzungsvorgang. Ein Nachteil der auf kreditkartenbezogenen inkassovorgängen basierenden Lösungssysteme ist die Notwendigkeit des online-Betriebs der Automaten, wodurch eine aufwendige Rechner- und Installationstechnologie erforderlich ist. Darüber hinaus umfassen derartige Systeme Sicherheitsrisiken, da die Nutzerdaten auch zu Zwecken des Mißbrauchs abgezweigt werden können. Die übrigen Systeme setzen eine umfassende und Inkassovorgänge absichernde Vorabwicklung zwischen Betreiber und Nutzer voraus, wodurch die Variabilität der entsprechenden Automatennutzung auf durch den Betreiber vorgegebene Nutzungsbereiche eingeschränkt wird. Die Nutzer müssen daher für unterschiedliche Nutzungsbereiche unterschiedliche Karten, Kennungen und dergleichen vorhalten.

Es sind keine Verfahren bekannt, die einen die Variabilität in bezug auf Nutzungsberechtigungen nicht einschränkende und die Automatennutzung vom Betreibersystem abkoppelnden Verfahren bekannt, die mit geringem administrativen Aufwand und ohne große vorausschauende Planung durch den Nutzer bei Einhaltung von erforderlichen Sicherheiten einsetzbar sind.

Ausgehend vom vorbeschriebenen Stand der Technik liegt der vorliegenden Erfindung die **Aufgabe** zugrunde, ein Verfahren zur bargeldlosen Abwicklung von Automaten-Nutzungsvorgängen unter Verwendung eines Mobilfunkendgerätes zur Kommunikation mit einer Zentralstelle bereitzustellen, welches einen weitgehenden Schutz gegen Mißbrauch bei gleichzeitiger Erhöhung der Variabilität des Automateneinsatzes umfaßt.

Zur technischen **Lösung** dieser Aufgabe wird mit der Erfindung ein Verfahren mit folgenden Schritten vorgeschlagen:
a) Anwahl einer im Bereich des Automaten angegebenen Telefonnummer einer Zentralstelle,
b) Empfang eines automaten- und/oder vorgangsbezogenen Abwicklungscodes für eine eingeräumte Nutzungsberechtigung über die Zentralstelle, wobei in der Zentralstelle die Mobilfunknummer des Anrufers und der übermittelte Abwicklungscode gespeichert werden,
c) Eingeben des empfangenen Abwicklungscodes in den Automaten, wobei bei Einlösen der Nutzungsberechtigung im Automaten der Abwicklungscode und die Nutzungsinformation gespeicherte werden.

Erfindungsgemäß können beliebige Automaten ohne direkte Kommunikationsverbindung zu einer Zentralstelle, einer Abgleichstelle oder dergleichen für beliebige Zwecke wie Produktausgabe, Ausgabe von Berechtigungsausweisen, Nutzungsberechtigungen und dergleichen eingesetzt werden. Ein solcher offline-Automat, der selbstverständlich für die herkömmlichen Zahlungsweisen wie Bargeld, Kreditkarte und dergleichen eingerichtet sein kann, weist bei Auswahl der erfindungsgemäßen Abwicklungsform eine Telefonnummer aus. Mittels eines Mobilfunkendgerätes wählt der Nutzer diese Telefonnummer an. In einer Zentralstelle, einem sogenannten offline-payment-Server wird die eingehende Mobilfunknummer empfangen. Unter Umständen setzt dies eine entsprechende Freigabe der Anzeige der Absendemummer durch den Nutzer in seinem Mobilfunkgerät voraus, wobei es sich jedoch um einen von der vorliegenden Erfindung unabhängigen bekannten Stand der Technik handelt. Es ist anzumerken, daß es nicht zu einer kostenpflichtigen Kommunikationsverbindung zwischen dem Nutzer und der Zentralstelle kommen muß, denn es genügt, wenn die Zentralstelle den Anrufer anhand der eingehenden Nummer identifizieren kann. Da der Nutzer die Nummer vom Automaten entnommen hat, ist zentralstellenseitig bereits eine direkte Zuordnung von beabsichtigter Nutzung einerseits und der möglichen Nutzungsart des Automaten andererseits ohne weiteres möglich. Entweder erfolgt dies dadurch, daß eine Zentralstelle ohnehin nur für ganz bestimmte Automaten - und damit Nutzungstypen - eingerichtet ist, oder durch eine in der Zentralstelle hinterlegte Datenbank in bezug auf die möglichen Anwahlnummern. Nach der Anwahl des offline-payment-Servers ist dort also die Information vorhanden, daß der registrierte Nutzer des Mobilfunkendgerätes eine bestimmte vorgegebene Nutzungsberechtigung eines durch die Anwahlnummer identifizierten Automaten erlangen möchte. Zentralstellenseitig wird nunmehr ein Abwicklungscode zusammengestellt und beispielsweise in Form eines sms an das Mobilfunkendgerät des Nutzers übermittelt. Alternativ zu einer SMS können beispielsweise Sprachansagen, WAP-Übertragungen oder dergleichen verwendet werden. Der Abwicklungscode ist auf die beabsichtigte Nutzungsart und den zu benutzenden Automaten abgestimmt. Der den Abwicklungscode empfangende Nutzer gibt diesen Abwicklungscode nunmehr in den Automaten ein. Der dortige Rechner ist nun in der Lage, anhand des Abwicklungscodes nutzungsbezogene Informationen zu ermitteln und den Automaten für eine bestimmte Nutzungsart freizugeben. Der Nutzer kann nun die gewünschte Nutzungsberechtigung einlösen, d. h. Produkte entnehmen, eine Abbuchung bestätigen, eine Berechtigung realisieren oder dergleichen.

Im Automaten werden nun Informationen gespeichert, die den eingegebenen Code einerseits und die durchgeführte Nutzung andererseits umfassen. In der Zentralstelle ist dem Abwicklungscode die Mobilfunknummer des Betreibers zugeordnet. Es ist nunmehr möglich, im einfachen offline-Transaktionsbetrieb einen Inkassovorgang in bezug auf die durchgeführte Nutzung durchzuführen. Hierzu stehen die an sich bekannten Verfahren bereit, beispielsweise die Abwicklung über die Telefonrechnung, wobei der Telefonbetreiber die Zentralstelle ist, die die Zuordnung der Mobilfunknummer zu personenbezogenen Inkassoinformationen vorhält, oder es können hierfür separate Voreinstellungen entweder im offline-payment-Server selbst oder in von diesem genutzten übergeordneten Zentralen erfolgen.

Offline-payment-Server können für eine bestimmte Automatengruppe oder als übergeordnetes System ausgelegt sein, und der Bezug zu Inkassoinformationen der Nutzerperson kann direkt oder indirekt hergestellt sein. Will beispielsweise der Nutzer bestimmte Automatentypen nutzen, kann es sinnvoll und erforderlich sein, wenn er sich vorher bei der Betreiberzentrale so identifiziert, daß diese seine Mobilfunknummer direkt Inkassoinformationen, beispielsweise Kontonummer, Kreditkartennummern oder dergleichen einrichten kann. Auch können prepaid-Systeme genutzt werden, indem eine Zentralstelle ein Guthaben eines Nutzers, zugeordnet zu seiner Mobilfunknummer verwaltet. Andererseits können auch übergeordnete Zentralen die personenbezogenen Inkassoinformationen und die Mobilfunknummer des Nutzers verwalten und einer Vielzahl von offline-payment-Servern bei Bedarf bereitstellen.

Die Übermittlung der im Automaten gespeicherten Informationen kann im offline-Betrieb, beispielsweise durch Datenträgeraustausch oder dergleichen erfolgen, oder auch im online-Betrieb durch Auslesen des Automatenspeichers und Übermitteln der Informationen an die gewünschte Zentralstelle. In keinem Fall ist es erforderlich, daß der Automat zeitlich unbegrenzt und zum direkten Zweck der Nutzung in irgendeiner Form zu Zwecken der Datenkommunikation vernetzt sein muß.

Gemäß einem weiteren Vorschlag der Erfindung kann die Anwendung des erfindungsgemäßen Verfahrens von der zusätzlichen Verwendung einer persönlichen Identifikationsnummer abhängig gemacht werden. Mögliche Bedingungen hierfür sind vielfältig. So kann beispielsweise ein bestimmter Automatentyp und damit ein bestimmter Produkt- oder Nutzungstyp wegen des besonders hohen Wertes die zusätzliche Verwendung der Identifikationsnummer rechtfertigen. Weitere mögliche Bedingungen sind beispielsweise die zur Nutzung erforderlichen Beträge, Überschreitungen von Tageslimits, personenbezogene Vorgänge, wie beispielsweise erschwerte Inkassoabwicklungen, Tageszeiten, Diebstahlprofile, d. h. im wesentlichen statistisch ermittelte Diebstahlhäufigkeiten, Zufallsgeneratoren und schließlich auch die persönliche Entscheidung des Nutzers. Da der Automat und die Zentralstelle nicht in einer direkten Kommunikationsverbindung stehen, kann gemäß einem Vorschlag der Erfindung die Notwendigkeit der zusätzlichen Eingabe einer persönlichen Identifikationsnummer in dem Abwicklungscode als verschlüsselte Information hinterlegt sein, d. h., der automatenseitige Rechner kann durch Analyse des Abwicklungscodes erkennen, daß die zusätzliche Eingabe der persönlichen Identifikationsnummer erforderlich ist.

Der Abwicklungscode kann erfindungsgemäß eine Vielzahl von Informationen umfassen. Beispielsweise können konkrete freigegebene Beträge oder Betragsbereiche enthalten sein, Informationen wie PIN-Prüfung erforderlich oder nicht und dergleichen. Weiterhin ist der Abwicklungscode so gestaltet, daß der Automat die Richtigkeit des Codes in jedem Fall erkennen kann. So ist beispielsweise eine Identifikation vorgesehen, in welcher sich der Automat als Bestimmungsort erkennen kann, eine sogenannte Point-of-Sale-ldentifikation (POS-ID). Sinnvoll ist auch ein Zeitsignal. Weiterhin sinnvoll kann der Abwicklungscode in verschlüsselter Weise eine auf die persönliche Identifikationsnummer bezogene Information umfassen, so daß der Automat direkt bei Eingabe der persönlichen Identifikationsnummer eine Abgleichreferenz zur Verfügung hat. Gemäß einem weiteren vorteilhaften Vorschlag der Erfindung kann der Abwicklungscode eine Zeitinformation enthalten. Zentralseitig wird bei Übermittlung des Abwicklungscodes die aktuelle Zeit der Zentraluhr erfaßt und in den Code eingebaut. Automatenseitig kann bei Decodierung des Abwicklungscodes dann der Zeitraum zwischen der im Code enthaltenen Zeit einerseits und der automatenseitigen Zeit andererseits ermittelt und somit auf die Gültigkeit des Codes in Abhängigkeit vorgegebener Zeitintervalle geschlossen werden.

Ein Problem im Abgleich zwischen Zentrale und Automat kann sich dann ergeben, wen die Codierung eine Zeitinformation umfaßt, die automatenseitig anhand der Ist-Zeit überprüft wird. Ist die automatenseitige Uhr jedoch nicht genau oder jedenfalls nicht mit der zentralseitigen Uhr in Übereinstimmung, ergibt sich hier ein Interpretationsproblem. Aus diesem Grunde wird mit der Erfindung ein Verfahren zum automatischen Zeitabgleich vorgeschlagen, mit welchem innerhalb bestimmter Zeitbereiche ein Nachstellen einer nicht in direkter Verbindung mit einer Zentralzeit stehenden Satellitenuhr einerseits erfolgen kann, andererseits eine vollständige, d. h. außerhalb eines Toleranzbereiches liegende Abweichung feststellbar sind. Im Falle der Feststellung kann beispielsweise eine Außerbetriebsetzung des Automaten bis zum nächsten Service erfolgen.

Dieses Verfahren sieht vor, daß in dem Automaten, in dem eine nicht mit einer Quelle verbundene Satellitenuhr geführt wird, ein Code eingegeben wird, welcher auch eine Zeitcodierung enthält. Durch die Decodierung erhält der Automatenrechner einen Zeitpunkt, der der dem Zeitpunkt der Codierung unter Nutzung der nicht mit der Satellitenuhr verbundenen Zentraluhr entspricht. Diese erhaltene Zeit wird nun mit der sich aus der automatenseitigen Realzeit verglichen. Dabei wird von vorn herein ein Toleranzspektrum angelegt, welches in etwa der Zeitspanne entspricht, die notwendig ist, um eine Codierung an einen Nutzer zu übermitteln und durch den Nutzer in den Automaten einzugeben. Beispielsweise wird eine Zeitverzögerung von 10 Sekunden angesetzt. Liegen die Zeiten auseinander, wird gemäß dem erfindungsgemäßen Verfahren automatenseitig ein zweites, erweitertes Toleranzfeld verwendet, beispielsweise minus 20 Sekunden. Kommt es auch hier zu keiner Übereinstimmung, wird automatenseitig beispielsweise ein weiteres Toleranzfeld, z. B. minus 30 Sekunden verwendet. Liegen also Echtzeit und empfangene Zeit um die negativen Toleranzzeiträume auseinander, erkennt der Automat einen gültigen Code und kann entsprechend angesteuert werden. Hierbei kann das Erfordernis der angewendeten Toleranz statistisch erfaßt und ausgewertet werden. So ist der Automatenrechner in der Lage, festzustellen, daß regelmäßig eine große Toleranzgrenze verwendet werden muß, um eine Übereinstimmung zu finden. Somit weiß der Automat, daß die Satellitenuhr vorgeht und er kann diese beispielsweise um einen Toleranzfeldmittelwert justieren. Fällt jedoch auch bei mehrfacher Toleranzfeldänderung in den negativen Bereich keine Übereinstimmung an, wird gemäß dem erfindungsgemäßen Verfahren wenigstens eine Übereinstimmungsprüfung in wenigstens einem positiven Toleranzfeld durchgeführt. Eine Übereinstimmung in diesem Bereich bedeutet, daß die Satellitenuhr gegenüber der Zentraluhr nachgeht, so daß alle empfangenen Zeiten in einem positiven Toleranzfeld, also in der zeitlichen Zukunft liegen. In diesem Fall kann der Rechner ebenfalls die Satellitenuhr durch vorstellen nachjustieren. Erst wenn weder in den negativen noch den positiven Toleranzfeldem Übereinstimmungen erzielbar sind, wird der Code als ungültig erkannt und dargestellt. Durch die statistische Erfassung solcher Vorgänge kann der Automat nach einer bestimmten Anzahl direkt aufeinanderfolgender, ungültiger Vorgänge erkennen, daß entweder Manipulationsversuche vorliegen oder seine Satellitenuhr dermaßen gegenüber der Zentraluhr verstellt ist, daß der Automatenrechner den Automaten als nicht betriebsbereit sperrt, so daß erst durch einen entsprechenden Service ein wieder Inbetriebsetzen erfolgt. Während des Service kann beispielsweise auch eine Satellitenuhrnachstellung erfolgen.

Um Fehler und Manipulationen ausschließen zu können, ist es erforderlich, daß sämtliche erfindungsgemäß verwalteten Automaten eine individualisierende Nummer haben. Daraus ergibt sich, daß ausgesprochen lange Automatennummern vergeben werden müßten. Es zeigt sich jedoch, daß die Erfindung hier auf einen praktischen Aspekt der Mobilfunknetze zurückgreifen kann, um somit in erfindungsgemäßer Weise einen Vorteil in der Ausgestaltung der Erfindung zu erlangen. Die Mobilfunknetze sind derart aufgebaut, daß sie gewählten Ziffern automatisch geographische Kennungen zuordnen, so daß auch bei der Vergabe weniger Ziffern umfassende Automatennummern dann eine Individualisierung gegeben ist, wenn nicht zwei Automaten gleicher Nummer im gleichen geographischen Bereich, ausgehend von der Mobilfunkaufteilung, angeordnet sind. Somit wird in erfindungsgemäßer Weise vorgeschlagen, als Automatennummern verkürzte Nummern zu verwenden, die in den Mobilfunknetzen automatisch um geographische Kennungen ergänzt werden.

Ein weiteres Problem, dem sich die vorliegende Erfindung stellt, ist das Problem des Wechsels der Sicherheitsschlüssel, die für die kryptologische Verschlüsselung im Zentralrechner einerseits und die kryptologische Entschlüsselung im Automatenrechner andererseits verwendet werden. Da Zentralrechner und Automatenrechner nicht in einer Kommunikationsverbindung stehen, also im Offline-Betrieb betrieben werden, ist es erforderlich, daß beide Rechner auf die gleichen Schlüssel zurückgreifen. Aus Sicherheitsgründen ist es andererseits jedoch erforderlich, die Schlüssel von Zeit zu Zeit zu wechseln, um die Ausforschbarkeit und Manipulierbarkeit des Systems ausschließen zu können.

Aus dem Stand der Technik bekannte Verfahren, Schlüsselwechsel zu bestimmten Zeitpunkten durchzuführen, haben nicht nur den Nachteil der leichteren Ausforschbarkeit, sondern enthalten auch das Problem, daß die Zentraluhr und die Satellitenuhr nicht regelmäßig identisch laufen, es also Zeitverzögerungen zwischen den beiden Schlüsselwechseln gibt, die zu Funktionsstörungen führen können.

Das mit der Erfindung vorgeschlagene Verfahren löst diese Probleme. Es wird dabei vorgesehen, daß dem dezentral betriebenen Automatenrechner eine "Tabelle" vor Codierungsschlüsseln durch Einspeicherung bereitgestellt wird. Vom Startzeitpunkt an verwendet der Automatenrechner den ersten Schlüssel der Tabelle für die Decodierung erhaltener Codes. Dies wird solange durchgeführt, bis eine Decodierung einen nicht gültigen Code identifiziert. Daraufhin wird seitens des Automatenrechners der erhaltene Code nochmals entschlüsselt, wobei der nächstfolgende Schlüssel aus der Tabelle zur Anwendung kommt. Ergibt sich bei dieser Operation ein gültiger Code, wird der gerade verwendete Schlüssel fortan als neuer Schlüssel angewandt. Auf diese Weise kann somit ein Schlüsselwechsel, angeregt durch den Zentralrechner, zeitlich unabhängig seitens des Automatenrechners nachvollzogen werden, ohne daß beide zeitlich abgeglichen oder im Online-Betrieb sind. In dem Augenblick, wo der Automatenrechner erkennt, daß der nächstfolgende Code eine gültige Decodierung hervorbringt, ist dieser nächstfolgende Code der neue Startcode. Durch dieses erfindungsgemäße Verfahren sind Wechsel von Sicherheitsschlüsseln praktisch völlig frei von zeitlichen Vorgaben, Regeln und dergleichen durchführbar, ohne daß sich Manipulationsmöglichkeiten, Ausforschungsmöglichkeiten oder dergleichen ergeben.

Die Eingabe der übermittelten Abwicklungscodes in den Automaten kann unter Verwendung eines Tastaturfeldes, gegebenenfalls auch dargestellt auf einem Touchscreen, oder alternativ auch berührungslos erfolgen, indem der Betreiber des Mobilfunkgerätes den empfangenen Code beispielsweise mittels einer blue tooth-Verbindung, Irda (Infrarot) oder dergleichen an den Automaten weitergibt. Dabei wird gemäß einem besonders vorteilhaften Vorschlag der Erfindung ein reduziertes Tastaturfeld bereitgestellt und gekoppelt mit der Entwicklung nur einen reduzierten Zahlensatz umfassender Codes. Beispielsweise kann das Tastaturfeld nur die Ziffern 1 bis 9 aufweisen, also keine 0. Die Codes werden dann so aufgebaut, daß die Eingabe einer 0 nicht erforderlich ist. Dies hat den besonderen Vorteil, daß Fehleingaben bzw. Bedienfehler vermieden werden. Da nahezu alle im Bereich des Automaten angezeigten und vom Nutzer anzuwählenden Telefonnummern mit einer 0 anfangen, kommt der Nutzer gar nicht erst auf die Idee, zu versuchen, über das automatenseitige Tastaturfeld eine Nummernwahl durchzuführen. Vielmehr werden die mangelnde Eignung und damit auch der Bedienfehler automatisch erkannt.

Das erfindungsgemäße Verfahren ermöglicht die Abkopplung der Automatennutzung von der Betreiberorganisation einerseits und dem Inkassovorgang andererseits. Der jeweils zu nutzende Automat ist eine standalone-Version. Es ergibt sich eine indirekte Verbindung zum offline-payment-Server durch die auf dem Automat lesbar identifizierte Telefonnummer. Die Kommunikation zwischen dem Nutzer und dem offline-payment-Server erfolgt unter Nutzung eines Mobilfunkendgerätes, wobei die Kosten auf die Übersendung einer sms von der Zentralstelle an den Nutzer reduziert werden können. Der vor Ort im Bereich des Automaten befindliche Nutzer kommuniziert seinerseits mit dem Automaten über eine direkte Eingabeschnittstelle, beispielsweise blue tooth oder Tastaturfeld. Eine indirekte Kopplung zwischen payment-Serversystem und Automat ergibt sich durch eine Synchronisation der Rechnersoftware, d. h. der automatenseitige Rechner ist in der Lage, die vom zentralseitigen Rechner zusammengestellte Abwicklungscodierung zu entschlüsseln und den Automaten damit für die gewünschte Berechtigung freizuschalten. Die Variabilität des Einsatzes vergrößert zugleich auch die Einsatzmöglichkeiten für Automaten. Das Verfahren ist anwendbar auf Warenausgabeautomaten, beispielsweise Tankstellensäulen, Zigarettenautomaten, Fahrausweisautomaten, Warenausgabeautomaten und dergleichen, kann jedoch bis hin zu Zahlungsabwicklungen in herkömmlichen Verkaufsstellen erweitert werden. So kann sich beispielsweise ein Käufer bei Betreten eines Supermarktes, Warenhauses oder dergleichen nach dem erfindungsgemäßen Verfahren einen Betrag freischalten lassen und an der Kasse nur noch durch Eingabe des empfangenen Abwicklungscodes den Bezahlungsvorgang abwickeln. Auch können Verkaufsörtlichkeiten direkt auf das Verfahren ausgerichtet werden.

Die Sicherheitsrisiken sind bei dem erfindungsgemäßen Verfahren auf eine Minimum reduziert. Im Normalfall kann davon ausgegangen werden, daß bereits die Nutzung des Mobilfunkgerätes durch die erforderliche Eingabe ein PIN ausreichend gesichert ist. Ein Mißbrauch des Verfahrens kommt also nur in Betracht, wenn ein Mobilfunkgerät in eingeschaltetem und freigegebenem Zustand durch einen unberechtigten Nutzer genutzt wird. Durch die Einrichtung von Tageslimits, die zusätzliche Anforderung der Eingabe von persönlichen Identifikatiosnummern, die Analyse statistisch ermittelter Diebstahlprofile und dergleichen kann jedoch dieses Risiko ebenfalls auf ein Minimum reduziert werden.

Weitere Vorteile und Merkmale der Erfindung ergeben sich aus der folgenden Beschreibung anhand der Figur. Dabei zeigt:

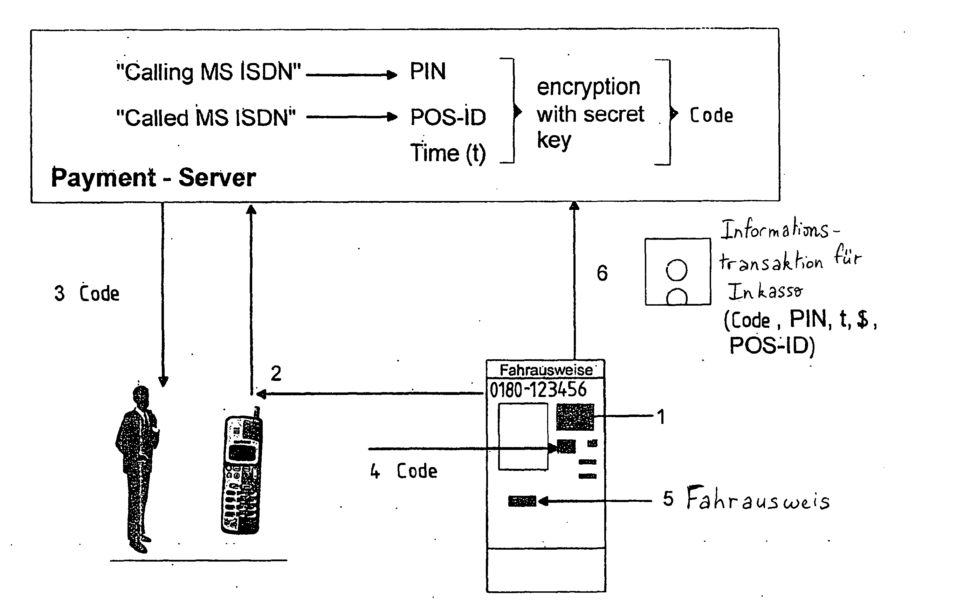

- Fig. 1: eine schematisierte Darstellung eines Ablaufdiagramms für die Nutzung eines Fahrausweisautomaten.

In der Figur ist ein Fahrausweisautomat gezeigt, welcher gut lesbar eine Telefonnummer identifiziert. Auf einem Auswahlfeld 1, beispielsweise einem Touchscreen, wählt der Nutzer die Zahlform aus. Entscheidet er sich für die erfindungsgemäße Zahlungsform, stellt sich der Automat für eine gewisse Zeit auf die Eingabe eines Abwicklungscodes ein. Der Nutzer wählt mittels des Mobilfunkgerätes, dargestellt durch ein Handy, die auf dem Automaten angegebene Telefonnummer und übermittelt über ein Mobilfunknetz (GSM) seine Telefonnummer an einen offline-payment-Server. Der offline-payment-Server ermittelt für den beabsichtigten Nutzungsvorgang, der ihm durch die angewählte Telefonnummer bekannt ist, den Abwicklungscode und übermittelt diesen beispielsweise mittels sms, Sprachansage, WAP oder dergleichen an das Mobilfunkgerät des Nutzers, gekennzeichnet durch das Bezugszeichen 3. Der Nutzer überträgt den empfangenen Abwicklungscode in das am Automaten bereitgehaltene Tastaturfeld, welches auch ein Touch Screen sein kann, gekennzeichnet durch Bezugszeichen 4. Optional kann die zusätzliche Eingabe einer personenbezogenen Identifikationsnummer erforderlich sein. Der Automat wird nun für die gewünschte Benutzung freigegeben, d. h. der Nutzer kann im Falle des gezeigten Ausführungsbeispiels nunmehr einen Fahrausweis entnehmen, bezeichnet durch Bezugszeichen 5. Hier kann er entweder einen freigegebenen Betrag verbrauchen oder in Abhängigkeit vom Abwicklungscode den Vorgang je nach Erfordernis abschließen. Nach der Ausgabe ist der Nutzungsvorgang für den Nutzer beendet. Im Automaten sind der Abwicklungscode oder daraus ermittelte Informationen sowie die den direkten Nutzungsvorgang betreffenden Informationen gespeichert. Aus dem Abwicklungscode kann der Automat zunächst vor der Freigabe die Zulässigkeit des Codes ermitteln, indem er beispielsweise die POS-ID entschlüsselt, optional die zusätzliche Prüfung der persönlichen Identifikationsnummer durchführt, ein Zeitsignal entschlüsselt und/oder setzt und dergleichen.

Mit 6 ist dann die Vorbereitung zur Abwicklung eines Inkassovorgangs gekennzeichnet, dargestellt durch eine Diskette. Die Art des Auslesens der Informationen aus dem Speicher des Automaten und die Übermittlung an die jeweilige Zentralstelle zur Abwicklung des Inkassovorgangs sind dabei variabel und können im offline-Betrieb oder im online-Betrieb erfolgen, wobei der online-Betrieb nur kurzzeitig und zweckgebunden hergestellt werden muß.

Bei diesem Ausführungsbeispiel ist auch ein Beispiel für die zentralseitige Zusammenstellung eines Abwicklungscodes gezeigt. Aus der angewählten Telefonnummer, bezeichnet mit "called MS ISDN" ermittelt die Zentrale die POS-ID und den Zeitpunkt. Aus der Analyse der anrufenden Mobilfunknummer, bezeichnet mit "calling MS ISDN" ermittelt die Zentrale die persönlichen Identifikationsdaten des Nutzers. Über diese persönlichen Identifikationsdaten kann die Zentrale aus einer Datenbank die erforderlichen Informationen wie Betragslimits, Erfordernis der zusätzlichen Eingabe einer persönlichen Identifikationsnummer, Sperrhinweise und dergleichen ermitteln. Aus der POS-ID kann die Zentrale weiterhin Verfallslimits und dergleichen festlegen. Aus den zusammengetragenen Informationen wird eine Abwicklungscodierung zusammengestellt und verschlüsselt, bezeichnet mit "encryption with secret key". Hierbei können je Zahlstelle (POS-ID) individuelle, also verschiedene, geheime Schlüssel zum Einsatz kommen. Die daraus sich ergebende Abwicklungscodierung wird im Schritt 3 beispielsweise per sms an den Nutzer übertragen. Nach in der oben beschriebenen Weise abgewickelter Nutzung hält der Rechner des Automaten die Transaktionsinformationen bereit, beispielsweise den Abwicklungscode, optional die persönliche Identifikationsnummer, Zeitpunkt, Betrag und die POS-ID. Weitere oder alternative Informationen wie beispielsweise Wareninformationen für statistische Auswertungen und dergleichen können aufgenommen sein.

Das beschriebene Ausführungsbeispiel dient nur der Erläuterung und ist nicht beschränkend im Rahmen der Patentansprüche.

### Bezugszeichenliste

- 1: Zahlungsformauswahl
- 2: Anruf an Zentrale
- 3: Übermittlung des Abwicklungscodes
- 4: Eingabe des Abwicklungscodes
- 5: Nutzung
- 6: Informationstransaktion für Inkasso

## Patentansprüche

1. Verfahren zur bargeldlosen Abwicklung von Automaten-Nutzungsvorgängen unter Verwendung eines Mobilfunkendgerätes zur Kommunikation mit einer Zentralstelle, **gekennzeichnet durch** folgende Schritte:
a) Anwahl einer im Bereich des Automaten angegebenen Telefonnummer einer Zentralstelle,
b) Empfang eines automaten- und/oder vorgangsbezogenen Abwicklungscodes für eine eingeräumte Nutzungsberechtigung über die Zentralstelle, wobei in der Zentralstelle die Mobilfunknummer des Anrufers und der übermittelte Abwicklungscode gespeichert werden,
c) Eingeben des empfangenen Abwicklungscodes in den Automaten, wobei bei Einlösen der Nutzungsberechtigung im Automaten der Abwicklungscode und die Nutzungsinformation gespeichert werden.

2. Verfahren nach Anspruch 1, **dadurch gekennzeichnet, daß** ein Abgleich der im Automaten und der Zentralstelle gespeicherten Informationen zur Durchführung eines Inkassovorgangs durchgeführt wird.

3. Verfahren nach Anspruch 1, oder 2, **dadurch gekennzeichnet, daß** durch den Nutzer zusätzlich zum Abwicklungscode ein personenbezogener Identifikationscode in den Automaten eingegeben wird.

4. Verfahren nach Anspruch 3, **dadurch gekennzeichnet, daß** von der Zentralstelle zusätzlich zum Abwicklungscode eine Aufforderung zur zusätzlichen Eingabe des personenbezogenen Identifikationscodes übermittelt wird.

5. Verfahren nach Anspruch 4, **dadurch gekennzeichnet, daß** der Abwicklungscode eine durch den Automaten erkennbare Information enthält, die die Notwendigkeit der zusätzlichen Eingabe des personenbezogenen Identifikationscodes repräsentiert.

6. Verfahren nach einem der vorhergehenden Ansprüche, **dadurch gekennzeichnet, daß** der Abwicklungscode eine Betragsinformation enthält.

7. Verfahren nach einem der vorhergehenden Ansprüche, **dadurch gekennzeichnet, daß** der Abwicklungscode eine Berechtigungsinformation enthält.

8. Verfahren nach einem der vorhergehenden Ansprüche, **dadurch gekennzeichnet, daß** der Abwicklungscode eine Zeitinformation enthält.

9. Verfahren nach einem der vorhergehenden Ansprüche, **dadurch gekennzeichnet, daß** automatenseitig aufgrund einer im Abwicklungscode enthaltenen Zeitinformation eine Uhrnachstellung durchgeführt wird.

10. Verfahren nach einem der vorhergehenden Ansprüche, **dadurch gekennzeichnet, daß** die Automatennummer eine Kurzwahlnummer ist, die durch eine geographische Mobilfunkkennung automatisch ergänzt wird.

11. Verfahren nach einem der Ansprüche 6 bis 8, **dadurch gekennzeichnet, daß** zur Codierung/Decodierung der in dem Abwicklungscode enthaltenden Information ein kryptographischer Schlüssel verwendet wird.

12. Verfahren nach Anspruch 11, **dadurch gekennzeichnet, daß** der kryptographische Schlüssel sowohl in der Zentralstelle als auch im Automaten von Zeit zu Zeit gewechselt wird.

13. Verfahren nach Anspruch 11 oder 12, **dadurch gekennzeichnet, daß** automatenseitig ein Wechsel des krypographischen Schlüssels aufgrund der Erkennung einer ungültigen Codierung mit einem bisherigen Schlüssel und der Erkennung der Gültigkeit der Codierung mit einem alternativen Schlüssel erkannt wird.

14. Verfahren nach einem der vorhergehenden Ansprüche, **dadurch gekennzeichnet, daß** die Eingabe des Abwicklungscodes in den Automaten mittels eines automatenbezogenen Tastaturfeldes erfolgt.

15. Verfahren nach Anspruch 16, **dadurch gekennzeichnet, daß** ein Tastaturfeld mit reduziertem Ziffernumfang verwendet wird.

## Claims

1. Method for a cashless process of using vending machines, using a mobile radio end device for communication with a center, **characterized by** the following steps:
a) dialing a telephone number of a center identified in the vending machine area,
b) receiving a vending machine and/or process-related processing code for a granted authorization of use through the center, wherein the mobile phone number of the calling party and the transmitted processing code are stored in the center,
c) inputting the received processing code in the vending machine, wherein the processing code and the information of use are stored in the vending machine upon redeeming the authorization of use.

2. Method according to claim 1, **characterized in that** a matching of the information stored in the center and in the vending machine is performed for conducting a collecting operation.

3. Method according to claim 1 or 2, **characterized in that** a personal identification code is input by the user in the vending machine in addition to the processing code.

4. Method according to claim 3, **characterized in that** a request for the additional input of the personal identification code in addition to the processing code is communicated by the center.

5. Method according to claim 4, **characterized in that** the processing code contains information recognizable by the vending machine, which information represents the necessity of the additional input of the personal identification code.

6. Method according to one of the preceding claims, **characterized in that** the processing code contains information of an amount.

7. Method according to one of the preceding claims, **characterized in that** the processing code contains information of authorization.

8. Method according to one of the preceding claims, **characterized in that** the processing code contains information of time.

9. Method according to one of the preceding claims, **characterized in that** a clock adjustment is performed in the vending machine due to time information contained in the processing code.

10. Method according to one of the preceding claims, **characterized in that** the number of the vending machine is a speed dialing number which is automatically supplemented by a geographic mobile radio code.

11. Method according to one of the claims 6 to 8, **characterized in that** for encoding/decoding of the information contained in the processing code a cryptographic key is used.

12. Method according to claim 11, **characterized in that** the cryptographic key is changed from time to time both in the center and in the vending machine.

13. Method according to claim 11 or 12, **characterized in that** on behalf of the vending machine a change of the cryptographic key is recognized due to the recognition of an invalid coding with a previous key and the recognition of the validity of the coding with an alternative key.

14. Method according to one of the preceding claims, **characterized in that** the input of the processing code in the vending machine is made by means of a vending machine-related keypad.

15. Method according to claim 16, **characterized in that** a key pad having a reduced volume of digits is used.

## Revendications

1. Procédé pour effectuer sans numéraire des opérations d'utilisation de machines de vente en utilisant un terminal de radiotéléphonie mobile pour communiquer avec une centrale, **caractérisé par** les étapes suivantes :
a) sélection d'un numéro de téléphone d'une centrale indiqué dans la zone de la machine,
b) réception d'un code d'exécution spécifique à la machine et/ou à l'opération pour une autorisation d'utilisation accordée par la centrale, le numéro de radiotéléphonie mobile de l'appelant et le code d'exécution envoyé étant mémorisés dans la centrale,
c) entrée dans la machine du code d'exécution reçu, le code d'exécution et l'information d'utilisation étant mémorisés dans la machine lors du retrait de l'autorisation d'utilisation.

2. Procédé selon la revendication 1, **caractérisé en ce qu'**un alignement des informations mémorisées dans la machine et dans la centrale est effectué pour effectuer une opération d'encaissement.

3. Procédé selon la revendication 1 ou 2, **caractérisé en ce qu'**un code d'identification spécifique à la personne est entré dans la machine par l'utilisateur en plus du code d'exécution.

4. Procédé selon la revendication 3, **caractérisé en ce qu'**une invitation à entrer en plus le code d'identification spécifique à la personne en plus du code d'exécution est envoyée par la centrale.

5. Procédé selon la revendication 4, **caractérisé en ce que** le code d'exécution contient une information qui peut être reconnue par la machine qui représente la nécessité de l'entrée supplémentaire du code d'identification spécifique à la personne.

6. Procédé selon l'une des revendications précédentes, **caractérisé en ce que** le code d'exécution contient une information sur le montant.

7. Procédé selon l'une des revendications précédentes, **caractérisé en ce que** le code d'exécution contient une information de légitimation.

8. Procédé selon l'une des revendications précédentes, **caractérisé en ce que** le code d'exécution contient une information de temps.

9. Procédé selon l'une des revendications précédentes, **caractérisé en ce qu'**une position d'horlogerie est effectuée côté machine en raison d'une information de temps contenue dans le code d'exécution.

10. Procédé selon l'une des revendications précédentes, **caractérisé en ce que** le numéro de machine est un numéro abrégé qui est complété automatiquement par une identification géographique de radiotéléphonie.

11. Procédé selon l'une des revendications 6 à 8, **caractérisé en ce qu'**une clé cryptographique est utilisée pour le codage/décodage de l'information contenue dans le code d'exécution.

12. Procédé selon la revendication 11, **caractérisé en ce que** la clé cryptographique est changée de temps en temps aussi bien dans la centrale que dans la machine.

13. Procédé selon la revendication 11 ou 12, **caractérisé en ce que**, côté machine, un changement de la clé cryptographique est reconnu en raison de la reconnaissance d'un codage non valide avec une clé précédente et de la reconnaissance de la validité du codage avec une clé alternative.

14. Procédé selon l'une des revendications précédentes, **caractérisé en ce que** l'entrée du code d'exécution dans la machine est effectuée au moyen d'un clavier spécifique à la machine.

15. Procédé selon la revendication 16, **caractérisé en ce qu'**un clavier avec un nombre de chiffres réduit est utilisé.
